# FASCICULE DE BREVET EUROPEEN

(11) **EP 1 545 953 B1**
(45) Date de publication et mention de la délivrance du brevet: **13.08.2008**
(21) Numéro de dépôt: 03769273.8
(22) Date de dépôt: 09.09.2003
(51) Int. Cl.: B60T 17/22, B60T 11/26

(54) **RESERVOIR A REMPLISSAGE SIMPLIFIE**
TANK MIT VEREINFACHTEM FüLLSYSTEM
TANK WITH SIMPLIFIED FILLING SYSTEM

(30) Priorité: 11.09.2002 FR 0211270
(43) Date de publication de la demande: 29.06.2005
(73) Titulaire: ROBERT BOSCH GMBH, 70442 Stuttgart (DE)
(72) Inventeur: FRAISSE, Emmanuelle, F-75011 Paris (FR); COME, Philippe, F-60300 Senlis (FR); DEMERSSEMAN, Remi, F-75004 Paris (FR); GAFFE, François, F-93110 Rosny sous Bois (FR); BENOIT, Alain, F-93410 Vaujours (FR)
(74) Mandataire: Hurwic, Aleksander Wiktor
(86) Numéro de dépôt international: PCT/EP2003/010098
(87) Numéro de publication internationale: WO 2004/024525

(56) Documents cités:
- EP-A- 0 342 078
- WO-A-83/00207
- GB-A- 960 412
- US-A- 4 082 163

## Description

La présente invention se rapporte principalement à un réservoir comportant des moyens de mise à niveau améliorés de liquide de frein, un procédé de mise à niveau du liquide de frein dudit réservoir et un système de freinage comportant un tel réservoir, et plus particulièrement à un réservoir permettant sa mise à niveau par un dispositif automatisé unique de mise à niveau du liquide de frein.
Le document EP-A-0 342 078 **décrit un tel système.**
Les réservoirs, en particulier dans le domaine automobile, sont utilisés par exemple pour alimenter le circuit de freinage en liquide de frein, le niveau de remplissage de liquide de frein étant défini entre un niveau minimum et un niveau maximum prescrits par le fabricant du circuit de freinage.

De manière connue, lors du montage du circuit de freinage sur les véhicules sur chaîne de fabrication du véhicule et en particulier du réservoir de liquide de frein, celui-ci est rempli de liquide de frein. La mise à niveau du réservoir en liquide de frein disposé dans le compartiment moteur et relié au circuit de freinage, s'effectue suivant les étapes principales suivantes, une première étape de remplissage, après avoir introduit un tube du dispositif de mise à niveau dans le réservoir jusqu'à une pression comprise entre 5 bars et 10 bars dans le réservoir, et une seconde étape d'aspiration par un dispositif appelé suceuse, du liquide de frein en excès afin d'atteindre le niveau de remplissage maximum prescrit.
La suceuse comporte des moyens d'aspiration et un tube d'aspiration de longueur fixé disposé dans le réservoir lors de la mise à niveau. L'aspiration du liquide en excès s'interrompt lorsque le niveau de liquide de frein atteint la limite inférieure du tube d'aspiration c'est-à-dire lorsque le tube n'est plus en contact avec le liquide de frein.

Ceci implique que le niveau de remplissage sur la chaîne de fabrication du véhicule est déterminé par la position de l'extrémité inférieure du tube dans le réservoir, position qui n'est pas ou difficilement modifiable.

Or dans la plupart des cas, chaque modèle de véhicule a son propre modèle de réservoir et son propre niveau de remplissage, ce qui implique pour leur mise à niveau un dispositif de mise à niveau différent pour chaque modèle de véhicule. Et afin de s'adapter rapidement à la demande des clients, plusieurs modèles de véhicules passent sur la même chaîne de fabrication. Par conséquent le dispositif de mise à niveau doit actuellement être modifié à chaque nouveau modèle en fabrication sur la chaîne. Ce qui prend du temps et par conséquent augmente les coûts de revient.

On pourrait également prévoir des dispositifs de remplissage permettant de modifier le longueur du tube de remplissage, par exemple en changeant le tube cependant il y aurait un risque important d'erreur dans le changement du tube et donc un risque dans le bon fonctionnement des freins.

Le but de la présente invention est par conséquent d'offrir un réservoir comportant des moyens de mise à niveau de liquide de frein à un niveau de liquide de frein constant pour des modèles de réservoir identiques mais également à un niveau différent.

Le but de la présente invention est également d'offrir un réservoir permettant une mise à niveau rapide et peu coûteuse et facilement adaptable à différents modèles de véhicules.

Ces buts sont atteints par un réservoir comportant des moyens de mise à niveau du liquide de frein contenu dans le réservoir permettant un niveau de remplissage désiré en liquide de frein situé à un niveau différent de celui défini par l'extrémité inférieure du tube du dispositif de mise à niveau.

En d'autres termes, il s'agit d'un réservoir comportant une chambre inférieure de grande capacité et une chambre supérieure de petite capacité relativement à la capacité de la chambre inférieure et disposée en regard de l'orifice de remplissage du réservoir, afin de recevoir le tube de mise à niveau, la chambre supérieure comportant des moyens de communication avec la chambre inférieure dont la position détermine la quantité de liquide devant être retirée pour atteindre le niveau requis.

La présente invention a principalement pour objet un réservoir comportant une enveloppe définissant une chambre inférieure munie d'un orifice de remplissage, au moins un orifice d'écoulement, ladite chambre inférieure étant susceptible d'être remplie en fluide hydraulique à un niveau prédéterminé par un dispositif de mise à niveau de fluide hydraulique muni d'un tube de mise à niveau comportant une extrémité longitudinale pénétrant dans ledit réservoir caractérisé en ce que ledit réservoir comporte des moyens de mise à niveau, du fluide hydraulique contenu dans la chambre inférieure permettant une mise à niveau du fluide hydraulique à un niveau supérieur à celui de l'extrémité longitudinale du tube de mise à niveau.

La présente invention a également pour objet un réservoir caractérisé en ce que les moyens de mise à niveau, comportent une chambre supérieure comportant une première ouverture disposée en regard de l'orifice dé remplissage permettant la pénétration du tube de mise à niveau et une seconde ouverture dont la position correspond au niveau prédéterminé N et permettant la communication entre la chambre supérieure et la chambre inférieure.

La présente invention a principalement pour objet un réservoir caractérisé en ce que les première et seconde ouvertures sont confondues.

La présente invention a principalement pour objet un réservoir caractérisé en ce que la chambre supérieure est formée par une coupelle.

La présente invention a principalement pour objet un réservoir caractérisé en ce que le volume de la chambre supérieure des moyens de mise à niveau est compris entre 1 % et 5% du volume de la chambre inférieure.

La présente invention a principalement pour objet un réservoir caractérisé en ce que la coupelle est reliée à l'enveloppe par au moins une patte.

La présente invention a principalement pour objet un réservoir caractérisé en ce que la patte s'étend de la périphérie de la coupelle de la périphérie de l'orifice de remplissage.

La présente invention a principalement pour objet un réservoir caractérisé en ce que la coupelle est reliée à l'enveloppe par quatre pattes réparties angulairement sensiblement régulièrement sur la périphérie de la coupelle et séparées par des canaux permettant la communication entre la chambre inférieure et la chambre supérieure.

La présente invention a principalement pour objet un réservoir caractérisé en ce que ledit niveau correspond à un niveau maximum de remplissage.

La présente invention a principalement pour objet un réservoir caractérisé en ce que la coupelle est venue de matière avec la coquille supérieure.

La présente invention a principalement pour objet un réservoir caractérisé en ce qu'il comporte une coquille supérieure et une coquille inférieure.

La présente invention a principalement pour objet un procédé de mise à niveau du fluide hydraulique contenu dans un réservoir selon la présente invention caractérisé en ce qu'il comporte les étapes de :
- mise en place de l'extrémité longitudinale du tube de mise à niveau de fluide hydraulique du dispositif de mise à niveau dans la chambre supérieure par l'orifice de remplissage ;
- remplissage en fluide hydraulique dudit réservoir jusqu'à atteindre une pression dans le réservoir égale à une valeur prédéterminée ;
- aspiration du fluide hydraulique contenu dans la chambre supérieure jusqu'à ce que l'extrémité du tube ne soit plus en contact avec le fluide hydraulique.

La présente invention a principalement pour objet un système de freinage comportant un réservoir selon la présente invention.

La présente invention a pour avantage de ne pas nécessiter de modifications de la forme extérieure du réservoir qui est optimisée en fonction de la place disponible dans le compartiment moteur.

La présente invention sera mieux comprise à l'aide de la description suivante et des dessins annexés pour lesquels le haut et le bas correspondent respectivement à la partie supérieure et à la partie inférieure des dessins et sur lesquels :
la figure 1 est une vue en coupe longitudinale d'un réservoir selon la présente invention ;
La figure 2 est une vue schématique du réservoir selon la présente invention avec un dispositif de mise à niveau.

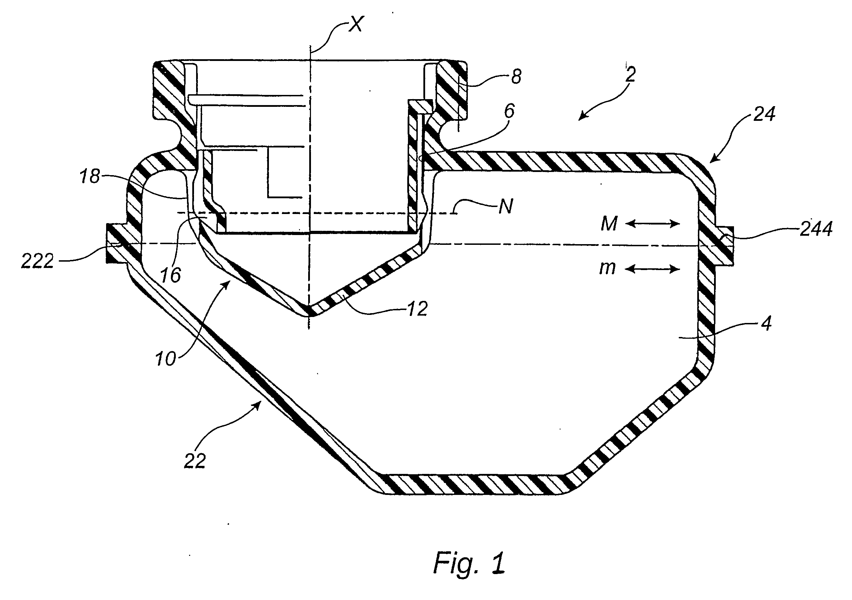

Sur les figure 1, on peut voir un réservoir selon la présente invention comportant une enveloppe rigide 2 définissant une chambre inférieure 4 en communication avec l'extérieur par un orifice de remplissage 6 d'axe X, lors d'une phase de remplissage du réservoir. L'orifice de remplissage 6 est avantageusement bordé par un goulot 8 d'axe X s'étendant hors de la chambre 4 et susceptible de coopérer avec un moyen d'obturation (non représenté), par exemple un bouchon (non représenté), avantageusement par vissage du bouchon sur le goulot. L'ensemble enveloppe 2 et bouchon forme un réservoir étanche.

La chambre 4 est en communication de manière étanche avec le circuit de freinage hydraulique par des moyens de communication (non représentés) disposés dans la partie inférieure de l'enveloppe 2 et permettant un écoulement du liquide de frein de la chambre 4 vers des freins (non représentés) disposés au niveau des roues du véhicule.

Dans une variante avantageuse, la chambre inférieure 4 est formée d'une première et d'une seconde capacités séparées par une paroi s'étendant sur une partie au moins de la hauteur de la chambre inférieure 4 et alimentant chacune respectivement de manière indépendante un premier et un second circuits de freinage.

Le réservoir est avantageusement réalisé par moulage en matière plastique compatible avec le liquide de frein, avantageusement transparente.

Le bon fonctionnement du circuit de freinage dépend entre autre du niveau de remplissage du réservoir en liquide de frein, le fabricant de dispositif de circuit de freinage définit ce niveau entre deux niveaux extrêmes, un niveau maximum M et un niveau minimum m.

Le réservoir comporte avantageusement sur l'enveloppe du réservoir une indication pour le niveau M et une indication pour le niveau m, l'indication pour le niveau M étant disposé au dessus de l'indication du niveau m. Les indications M et m sont avantageusement moulées dans l'enveloppe du réservoir.

Le réservoir comporte également avantageusement un indicateur électrique de niveau de liquide frein (non représenté) informant le conducteur que la quantité de liquide frein contenu dans le réservoir n'atteint pas le niveau minimum requis m pour le bon fonctionnement du circuit de freinage.

Le réservoir comporte également des moyens de mise à niveau 10 formés par une chambre supérieure 10. Dans l'exemple représenté, la chambre 10 à la forme d'une coupelle 12 dont la partie inférieure 14 est fermée par un fond, dans l'exemple représenté, sensiblement conique de conicité orientée vers le bas.

La chambre supérieure 10 comporte dans sa partie supérieure une ouverture 16 dont la position le long de l'axe X correspond à un niveau de remplissage prédéterminé N, dans l'exemple de réalisation le niveau N correspond au niveau de remplissage maximum M. Dans l'exemple décrit l'ouverture 16 est située en face du marquage M et en regard de l'orifice de remplissage 6.
Dans l'exemple de réalisation représenté, la chambre 10 est isolée de manière étanche par rapport à la chambre 4 sauf au niveau de l'ouverture 16.
On peut également envisager de dissocier l'ouverture 16 permettant la pénétration du tube de mise à niveau et les moyens de limitation du niveau de liquide de frein dans la chambre inférieure 4.
Dans une variante non représentée, l'extrémité supérieure de la chambre supérieure 10 permettant l'entrée du tube de mise à niveau dans la chambre supérieure 10 serait alors disposée au dessus de la position axiale déterminée par le niveau maximum de remplissage M et la chambre comporterait des orifices de communication entre la chambre supérieure 10 et la chambre inférieure 4 situés au niveau de remplissage maximum M, en regard du marquage M dans le réservoir.

Le réservoir est fixé dans un compartiment moteur d'un véhicule de façon que l'ouverture 16 de la chambre 10 soit disposée sensiblement parallèlement au sol sur lequel le véhicule se déplace.

L'enveloppe 2 est avantageusement fabriquée en deux parties, une première coquille 22 inférieure et une seconde coquille supérieure 24 fixées l'une à l'autre par leur extrémité supérieure 222 et inférieure 244 respectivement, par exemple par collage, par soudure ou par encliquetage et formant un réservoir étanche. On peut prévoir de rajouter des moyens d'étanchéité, par exemple un joint plat pour confirmer l'étanchéité.

La coupelle 12 est avantageusement formée de matière avec la coquille supérieure 22, par exemple par moulage.
La coupelle 12 est raccordée à la coquille 24 par des moyens de raccords 18, par exemple au moins une patte raccordant la coupelle 12 à la paroi du réservoir, par exemple la patte s'étend de la périphérie de la coupelle 12 à la périphérie extérieure de l'orifice 6. Les moyens de raccords comportent avantageusement quatre pattes 18, avantageusement régulièrement réparties sur la périphérie de l'ouverture 16 séparées par des lumières permettant la mise en communication de la chambre 10 avec la chambre 4.

Il est également envisageable de prévoir une coupelle 12 fabriquée indépendamment du réservoir et montée ensuite dans le réservoir, et fixée par exemple par des pattes d'accrochage coopérant avec la surface interne du goulot 8.

Il est également envisageable de prévoir un coupelle 12 fixée à la coquille inférieure 24 soit venu de matière soit par des moyens d'accrochage tels que précédemment décrits.

Le volume de la chambre supérieure 10 contient du liquide frein non utilisable par le circuit de freinage, par conséquent il est prévu de réaliser un chambre supérieure 10 ayant un volume le plus faible possible mais permettant une mise à niveau du liquide de frein par un dispositif standard. On peut prévoir de compenser cette perte de volume utile par une augmentation du volume de la chambre inférieur 4, par exemple par un relèvement de la position du niveau M.

La coupelle 12 ou chambre supérieure a un volume sensiblement compris entre 1% à 5% du volume de la chambre inférieure.
Par exemple la chambre a un volume de manière connue comprise entre 400cm³ et 600cm³, le volume de la chambre supérieure est alors compris entre 4cm³ à 30cm³.

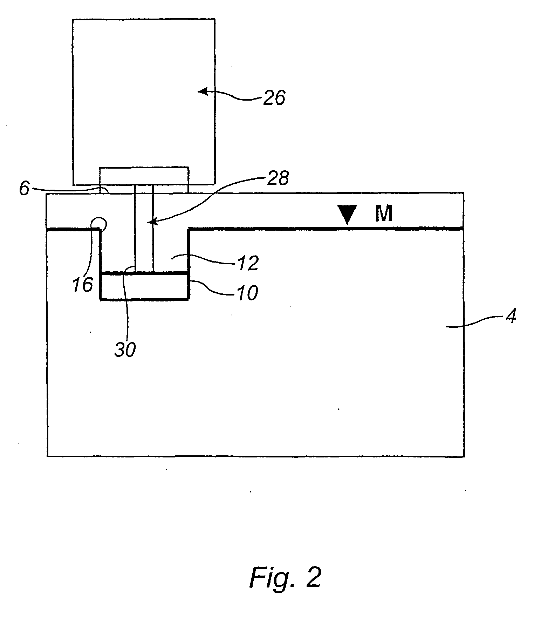

Sur le figure 2, on peut voir le réservoir selon la présente invention avec un dispositif de mise à niveau 26 comportant un tube de mise à niveau 28 disposé dans la chambre supérieure 10, le tube comporte une première extrémité longitudinale 30 pénétrant dans la chambre supérieure 10

Nous allons maintenant décrire le procédé de mise à niveau du réservoir selon la présente invention.

Le procédé de mise au niveau M du liquide de frein du réservoir selon la présente invention comporte :
- une première étape de mise en place du tube de remplissage dans le réservoir, plus particulièrement dans la chambre supérieure 10 par l'orifice de remplissage 6 ;
- une seconde étape de remplissage du réservoir par du liquide de frein jusqu'à atteindre une valeur prédéterminée de pression dans le réservoir;
- une troisième étape d'aspiration du liquide frein ; dans un premier temps le tube aspire le liquide en excès de la chambre inférieure 4 se déversant dans la chambre supérieure 10, puis dans un deuxième temps lorsque le niveau de liquide dans la chambre inférieure 4 a atteint le niveau M, il n'y a plus d'excédent de liquide s'écoulant de la chambre inférieure 4 vers la chambre supérieure 2, le liquide aspiré est alors uniquement celui contenu dans la chambre supérieure 10 jusqu'à ce qu'il n'y ait plus de contact entre le tube et le liquide ;

Par conséquent quelque soit la position axiale du niveau M par rapport à l'extrémité inférieure du tube de la suceuse, dés que la mise à niveau en liquide de frein dans la chambre inférieure 4 au niveau M est réalisée, la suceuse aspire le liquide contenu dans la chambre supérieure 10 sans faire varier le niveau de remplissage de la chambre inférieure 4.

On a bien réalisé un réservoir dont la mise à niveau est aisée quelque soit la position du niveau de remplissage maximum M par rapport à l'extrémité inférieure du tube de mise à niveau du dispositif de mise à niveau.

Il est bien entendu que le réservoir selon la présente invention est utilisable pour d'autres applications comme par exemple l'alimentation en liquide de refroidissement.

Il est également bien entendu que la position de la chambre supérieure et en particulier de l'ouverture 16 est déplaçable de manière à permettre un remplissage par exemple à un niveau minimum ou intermédiaire entre le niveau maximum et le niveau minimum si cela est nécessaire.

La présente invention s'applique notamment à l'industrie automobile.

La présente invention s'applique principalement à l'industrie du freinage pour véhicules automobiles et notamment à l'industrie du freinage pour voitures particulières.

## Revendications

1. Réservoir comportant une enveloppe (2) définissant une chambre inférieure (4) munie d'un orifice de remplissage (6), au moins un orifice d'écoulement, ladite chambre inférieure (4) étant susceptible d'être remplie en fluide hydraulique à un niveau prédéterminé (N) par un dispositif de mise à niveau (26) de fluide hydraulique muni d'un tube de mise à niveau (26) comportant une extrémité longitudinale (30) pénétrant dans ledit réservoir, ledit réservoir comportant des moyens de mise à niveau (10, 12) du fluide hydraulique contenu dans la chambre inférieure (4) permettant une mise à niveau du fluide hydraulique à un niveau supérieur à celui de l'extrémité longitudinale (30) du tube de mise à niveau (28) **caractérisé en ce que** les moyens de mise à niveau (10, 12) comportent une chambre supérieure (10) comportant une première ouverture disposée en regard de l'orifice de remplissage (6) permettant la pénétration du tube de mise à niveau et une seconde ouverture dont la position correspond au niveau prédéterminé (N) et permettant la communication entre la chambre supérieure (10) et la chambre inférieure (4).

2. Réservoir selon la revendication **1 caractérisé en ce que** les première et seconde ouvertures sont confondues.

3. Réservoir selon la revendication **1 ou 2 caractérisé en ce que** la chambre supérieure (10) est formée par une coupelle (12).

4. Réservoir selon la revendication **1, 2 ou 3 caractérisé en ce que** le volume de la chambre supérieure (10) des moyens de mise à niveau est compris entre 1 % et 5% du volume de la chambre inférieure.

5. Réservoir selon la revendication **4 caractérisé en ce que** la coupelle est reliée à l'enveloppe (2) par au moins une patte (18).

6. Réservoir selon la revendication **5 caractérisé en ce que** la patte (18) s'étend de la périphérie de la coupelle (12) de la périphérie de I orifice de remplissage (6).

7. Réservoir selon la revendication **6 caractérisée en ce que** la coupelle est reliée à l'enveloppe (2) par quatre pattes réparties angulairement sensiblement régulièrement sur la périphérie de la coupelle (12) et séparées par des canaux permettant la communication entre la chambre inférieure (4) et la chambre supérieure (10).

8. Réservoir selon l'une quelconque des revendications précédentes **caractérisé en ce que** ledit niveau correspond à un niveau maximum de remplissage (M).

9. Réservoir selon la revendication **8** avec la revendication **3 à 8 caractérisé en ce que** la coupelle (12) est venue de matière avec la coquille supérieure (24).

10. Réservoir selon l'une quelconque des revendications précédentes **caractérisé en ce qu'**il comporte une coquille supérieure (24) et une coquille inférieure (22).

11. Procédé de mise à niveau du fluide hydraulique contenu dans un réservoir selon l'un quelconque des revendications précédentes **caractérisé en ce qu'**il comporte les étapes de :
- mise en place de l'extrémité longitudinale (30) du tube de mise à niveau de fluide hydraulique (28) du dispositif de mise à niveau (26) dans la chambre supérieure (10) par l'orifice de remplissage (6);
- remplissage en fluide hydraulique dudit réservoir jusqu'à atteindre une pression dans le réservoir égale à une valeur prédéterminée ;
- aspiration du fluide hydraulique contenu dans la chambre supérieure (10) jusqu'à ce que l'extrémité (30) du tube (28) ne soit plus en contact avec le fluide hydraulique.

12. Système de freinage comportant un réservoir selon l'une quelconque des revendications de 1 à **10**.

## Claims

1. A tank comprising a casing (2) defining a bottom chamber (4) provided with a filling orifice (6) and at least one flow orifice, said bottom chamber (4) being suitable for being filled with hydraulic fluid up to a predetermined level (N) by a hydraulic-fluid level-setting device (26) provided with a level-setting tube (28) including a longitudinal end (30) penetrating into said tank, said tank including level-setting means (10, 12) for setting the level of hydraulic fluid contained in the bottom chamber (4) and enabling the hydraulic fluid to be set at a level that is higher than the level of the longitudinal end (30) of the level-setting tube (28), **characterized in that** the level-setting means (10, 12) comprise a top chamber (10) including a first opening disposed facing the filling orifice (6), enabling the level-setting tube to penetrate therethrough, and a second opening having a position that corresponds to the predetermined level (N), and enabling the top chamber (10) and the bottom chamber (4) to communicate with each other.

2. A tank according to claim 1, **characterized in that** the first and second openings coincide.

3. A tank according to claim 1 or claim 2, **characterized in that** the top chamber (10) is formed by a dish (12).

4. A tank according to claim 1, claim 2, or claim 3, **characterized in that** the volume of the top chamber (10) of the level-setting means lies in the range 1% to 5% of the volume of the bottom chamber.

5. A tank according to claim 4, **characterized in that** the dish is connected to the casing (2) by at least one tab (18).

6. A tank according to claim 5, **characterized in that** the tab (18) extends from the periphery of the dish (12) to the periphery of the filling orifice (6).

7. A tank according to claim 6, **characterized in that** the dish is connected to the casing (2) by four tabs angularly distributed in substantially regular manner over the periphery of the dish (12), and separated by channels enabling the bottom chamber (4) and the top chamber (10) to communicate with each other.

8. A tank according to any preceding claim, **characterized in that** said level corresponds to a maximum filling level (M).

9. A tank according to claim 8 with claim 3 to 8, **characterized in that** the dish (12) is integrally molded out of the same material as the top shell (24).

10. A tank according to any preceding claim, **characterized in that** it includes a top shell (24) and a bottom shell (22).

11. A level-setting method according to any preceding claims for setting the level of hydraulic fluid contained in a tank, said method being **characterized in that** it comprises the following steps:
· putting the longitudinal end (30) of the hydraulic-fluid level-setting tube (28) of the level-setting device (26) in place in the top chamber (10) via the filling orifice (6);
· filling said tank with hydraulic fluid until a pressure equal to a predetermined value is reached in the tank; and
· sucking out the hydraulic fluid contained in the top chamber (10) until the end (30) of the tube (28) is no longer in contact with the hydraulic fluid.

12. A brake system including a tank according to any one of claims 1 to 10.

## Patentansprüche

1. Behälter mit einem Mantel (2), der eine untere Kammer (4) definiert, die mit einer Einfüllöffnung (6) und mindestens einer Abflussöffnung versehen ist, wobei die untere Kammer (4) mit einer Hydraulikflüssigkeit bis zu einem vorgegebenen Pegel (N) über eine Vorrichtung (26) zum Einstellen des Pegels einer Hydraulikflüssigkeit gefüllt werden kann, die mit einem Pegeleinstellrohr (26) mit einem Längsende (30) versehen ist, das in den Behälter eindringt, wobei der Behälter Mittel (10, 12) zum Einstellen des Pegels der in der unteren Kammer (4) enthaltenen Hydraulikflüssigkeit aufweist, die ein Einstellen des Pegels der Hydraulikflüssigkeit bis zu einem Pegel ermöglichen, der höher als der Pegel des Längsendes (30) des Pegeleinstellrohrs (28) ist, **dadurch gekennzeichnet, dass** die Pegeleinstellmittel (10, 12) eine obere Kammer (10) umfassen, die eine erste, der Einfüllöffnung (6) gegenüberliegende Öffnung, die das Eindringen des Pegeleinstellrohrs ermöglicht, und eine zweite Öffnung aufweist, deren Stellung dem vorgegebenen Pegel (N) entspricht und die Verbindung zwischen der oberen Kammer (10) und der unteren Kammer (4) ermöglicht.

2. Behälter nach Anspruch 1, **dadurch gekennzeichnet, dass** die erste und die zweite Öffnung zusammenfallen.

3. Behälter nach Anspruch 1 oder 2, **dadurch gekennzeichnet, dass** die obere Kammer (10) durch einen Napf (12) gebildet ist.

4. Behälter nach Anspruch 1, 2 oder 3, **dadurch gekennzeichnet, dass** das Volumen der oberen Kammer (10) der Pegeleinstellmittel zwischen 1 % und 5 % des Volumens der unteren Kammer beträgt.

5. Behälter nach Anspruch 4, **dadurch gekennzeichnet, dass** der Napf mit dem Mantel (2) durch mindestens eine Lasche (18) verbunden.

6. Behälter nach Anspruch 5, **dadurch gekennzeichnet, dass** die Lasche (18) sich vom Umfang des Napfs (12) zum Umfang der Einfüllöffnung (6) erstreckt.

7. Behälter nach Anspruch 6, **dadurch gekennzeichnet, dass** der Napf mit dem Mantel (2) durch vier Laschen verbunden ist, die winkelmäßig und im Wesentlichen regelmäßig am Umfang des Napfs (12) verteilt und durch Kanäle getrennt sind, die die Verbindung zwischen der unteren Kammer (4) und der oberen Kammer (10) ermöglichen.

8. Behälter nach einem der vorhergehenden Ansprüche, **dadurch gekennzeichnet, dass** der Pegel einem maximalen Einfüllpegel (M) entspricht.

9. Behälter nach Anspruch 8 in Verbindung mit den Ansprüche 3 bis 8, **dadurch gekennzeichnet, dass** der Napf (12) einstückig mit der oberen Schale (24) gebildet ist.

10. Behälter nach einem der vorhergehenden Ansprüche, **dadurch gekennzeichnet, dass** er eine obere Schale (24) und eine untere Schale (22) aufweist.

11. Verfahren zum Einstellen des Pegels der Hydraulikflüssigkeit, die in einem Behälter nach einem der vorhergehenden Ansprüche enthalten ist, **dadurch gekennzeichnet, dass** es folgende Schritte umfasst:
- Einsetzen des Längsendes (30) des Hydraulikflüssigkeitspegeleinstellrohrs (28) der Pegeleinstellvorrichtung (26) in die obere Kammer (10) durch die Einfüllöffnung (6);
- Einfüllen des Behälters mit Hydraulikflüssigkeit, bis ein Druck, der einem vorgegebenen Wert entspricht, im Behälter erreicht wird;
- Absaugen der in der oberen Kammer (10) enthaltenen Hydraulikflüssigkeit, bis das Ende (30) des Rohrs (28) nicht mehr mit der Hydraulikflüssigkeit in Kontakt steht.

12. Bremssystem mit einem Behälter nach einem der Ansprüche 1 bis 10.
